(19) **Europäisches Patentamt**
**European Patent Office**
**Office européen des brevets**

(11) **EP 3 899 524 B1**

(12) **EUROPÄISCHE PATENTSCHRIFT**

(45) Veröffentlichungstag und Bekanntmachung des Hinweises auf die Patenterteilung:
**03.04.2024   Patentblatt 2024/14**

(21) Anmeldenummer: **19812665.8**

(22) Anmeldetag: **14.11.2019**

(51) Internationale Patentklassifikation (IPC):
**G01N 29/22** *(2006.01)*    **A61B 5/107** *(2006.01)*
**G01F 17/00** *(2006.01)*    **G01N 29/24** *(2006.01)*

(52) Gemeinsame Patentklassifikation (CPC):
**G01N 29/2418; G01F 17/00; G01N 29/222**

(86) Internationale Anmeldenummer:
**PCT/DE2019/000298**

(87) Internationale Veröffentlichungsnummer:
**WO 2020/125828 (25.06.2020 Gazette 2020/26)**

(54) **VORRICHTUNG UND VERFAHREN ZUR BESTIMMUNG DES VOLUMENS UND DER POROSITÄT VON OBJEKTEN UND SCHÜTTGÜTERN**

DEVICE AND METHOD FOR DETERMINING THE VOLUME AND POROSITY OF OBJECTS AND BULK MATERIALS

DISPOSITIF ET PROCÉDÉ POUR DÉTERMINER LE VOLUME ET LA POROSITÉ D'OBJETS ET DE MATIÈRES EN VRAC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2018   DE 102018009800**

(43) Veröffentlichungstag der Anmeldung:
**27.10.2021   Patentblatt 2021/43**

(73) Patentinhaber: **Forschungszentrum Jülich GmbH 52425 Jülich (DE)**

(72) Erfinder:
• **SYDORUK, Victor**
  **52428 Jülich (DE)**
• **KOCHS, Johannes**
  **52078 Aachen (DE)**
• **VAN DUSSCHOTEN, Dagmar**
  **6151 EP Munstergeleen (NL)**
• **JAHNKE, Siegfried**
  **42551 Velbert (DE)**

(56) Entgegenhaltungen:
**US-A- 4 072 046        US-A- 5 824 892**
**US-A1- 2016 120 443**

**Beschreibung**

Die Erfindung betrifft eine Vorrichtung und ein Verfahren zur Bestimmung des Volumens und der Porosität von Objekten und Schüttgütern.

In vielen technischen Bereichen besteht der Bedarf, das Volumen und die Porosität von Objekten und Schüttgütern zu messen.

Die Bestimmung des Volumens eines Objekts ist häufig schwierig, insbesondere wenn das Objekt eine unregelmäßige Form und/oder Rauigkeiten oder Poren auf seiner Oberfläche hat. Existierende Techniken zum Messen von Volumen solcher Körper sind beispielsweise Computertomographie (CT-Scans, d.h. bildgebende 3D-Vermessung zum Beispiel mit Röntgenstrahlen), Gasvolumeter oder akustische Volumeter. Außerdem sind optische Methoden verfügbar, die auf der Erfassung von Objektprojektionen aus verschiedenen Winkeln und anschließender 3D-Rekonstruktion des Objekts basieren. Mit den Verfahren nach dem Stand der Technik sind daher einige Nachteile verbunden.

CT-Verfahren sind aufwändig und kostspielig, erzeugen sehr große Datenmengen und beanspruchen hohe Rechenleistungen. Außerdem ist die Zeitdauer der Messungen in der Regel recht hoch. Hinzu kommt, dass eine eventuelle Beeinflussung durch Röntgenstrahlung z.B. bei biologischen Objekten berücksichtigt werden muss.

Bei Gasvolumetern ist die Verwendung externer Gase erforderlich. Die Zeit der Messungen im Vergleich zur Genauigkeit ist recht hoch. Eine Messung der Porosität von unregelmäßig geformten festen Objekten ist nicht möglich. Hinzu kommt, dass das gemessene Objekt teilweise erhöhten Drücken standhalten muss, außerdem ist der Messablauf in der Regel recht komplex.

Bei akustischen Volumetern (US4072046A, US5824892A, Torigoe, I. & Ishii, Y. Acoustic Bridge Volumeter. Trans. Soc. Instrum. Control Eng. E-1, 164-170, 2001; Kobata, T., Ueki, M., Ooiwa, A. & Ishii, Y. Measurement of the volume of weights using an acoustic volumeter and the reliability of such measurement. Metrologia 41, S75-S83, 2004) ist das Messprinzip ineffizient durch die Verwendung von zwei festgelegten Volumina, die zum Beispiel über eine Röhre verbunden sind. Dabei kommt es zu Verlusten. Außerdem arbeiten die bisher beschriebenen akustischen Volumeter nur in einem kleinen Frequenzbereich.

Die US Patentanmeldung US 2016/120443 A1 bezieht sich auf eine Einzelkammer-Volumenmessvorrichtung zur Messung des Volumens einer Person, eines Tiers oder eines Objekts und umfasst einen Schwingungsamplitudendetektor gekoppelt an eine oszillierende Membran.

Bei optischen Methoden können die Messdauer, die erreichbare Genauigkeit, große Datenmengen und hohe Rechenleistungen problematisch sein. Eine präzise Volumenbestimmung von zum Beispiel konkav geformten, porösen oder sehr komplexen Objekten ist damit kaum oder nicht möglich.

Bei der Flüssigkeitsverdrängung (Archimedes) sind die Messdauer, erzielbare Genauigkeit, Auswirkungen der Flüssigkeit auf das Objekt sowie anhaftende Flüssigkeiten von Nachteil.

Daher ist es die Aufgabe der Erfindung die genannten Nachteile zu überwinden.

Die Aufgabe wird durch das Verfahren gemäß Anspruch 1 sowie eine entsprechende Vorrichtung gemäß Anspruch 11 zur Durchführung des Verfahrens gelöst.

Die Erfindung betrifft ein Verfahren zur Bestimmung des Gesamtvolumens und/oder des wahren Volumens von Objekten, bei dem ein Gasraum einer geschlossenen Messkammer durch alternierende Kompression und Expansion des Gases in dem Gasraum der Messkammer, verursacht durch einen Wandler, komprimiert oder expandiert wird, diese Volumenänderung ∆V in der Messkammer eine Bewegungsänderung einer Membran eines Wandlers verursacht, wobei die Bewegung dieser Membran des Wandlers linear mit der Volumenänderung ∆V in der Messkammer korreliert, und wobei die mechanische Bewegung dieser Membran des Wandlers als Funktion des Volumens eines Objekts in einer Messkammer durch wenigstens eine Frequenz ausgelöst wird, wobei der Membran des Wandlers ein periodisches Signal aufgeprägt wird, abhängig von der Amplitude A, der Frequenz $f$ und der Zeit $t$, wodurch diese Membran eine Kraft F, welche die Membran an die Luft bzw. das Gas in der Messkammer überträgt, und wobei die Kraft F eine Funktion des angelegten Signals ist, für die gilt

$$F = func\ (A,\ f,\ t) \qquad \text{(Gleichung 1)}$$

und die Bewegungsänderung der Membran durch einen Sensorkopf mit induktiven oder kapazitiven oder optischen Messeigenschaften gemessen wird und wobei für die Volumenänderung ∆V in der Messkammer die Korrelation beschrieben werden kann mit

$$\Delta V \approx S\Delta l \qquad \text{(Gleichung 5)}$$

mit

ΔV = Volumenänderung,

ΔL = Auslenkung der Membran des Wandlers und

S = Fläche der Membran des Wandlers,

wobei zunächst eine Leermessung ohne Objekt in der Messkammer durchgeführt wird und wobei ein Signal ε im Messraum ohne Objekt erzeugt wird, das für induktive und kapazitive Messmethoden mit der Verschiebungsgeschwindigkeit der Membran des Wandlers korreliert und für die optische Messmethode von den Abständen dieser Verschiebungen abhängt, und wobei für dieses Signal ε ohne Objekt in der Messkammer folgende Gleichung gilt:

$$\varepsilon = \frac{V_0}{p_a \gamma_q S^2} C(A, f, t) \qquad \text{(Gleichung 6)}$$

mit

$A$ = Amplitude,

$f$ = Frequenz,

$t$ = Zeit,

$V_0$ = Innenvolumen der Messkammer,

$p_\alpha$ = Umgebungsdruck und

$\gamma_q$ = quasi-adiabatischer Index der Luft/des Gases im Gasraum der Messkammer, mit

$C(A, f, t) = C_0 \left( \frac{\partial func(A, f, t)}{\partial t} - \frac{\partial F_{loss}}{\partial t} \right)$ für induktive und kapazitive Messmethoden des Sensorkopfes, und

$C(A, f, t) = C_0(func(A, f, t) - F_{loss})$ für optische Messmethoden des Sensorkopfes, wobei

$C_0$ = Korrelationskoeffizient und

$F_{loss}$ = Kraftverlust, der durch die Biegekraft der Membran des Wandlers und Trägheitskraft zustande kommt, und dass anschließend wenigstens ein Objekt mit dem Volumen $V_s$ innerhalb der Messkammer platziert wird und ein Signal $\varepsilon_s$ erzeugt wird durch Anwendung derselben Amplitude $A$ und Frequenz $f$ wie bei der Leermessung und dass für das erzeugte Signal $\varepsilon_s$ folgende Gleichung gilt:

$$\varepsilon_S = \frac{V_0 - V_S}{p_a \gamma_q S^2} C(A, f, t) \qquad \text{(Gleichung 7)}$$

mit $\gamma_q$ = quasi-adiabatischer Index der Luft bzw. des Gases im Gasraum der Messkammer mit

$C(A, f, t) = C_0 \left( \frac{\partial func(A, f, t)}{\partial t} - \frac{\partial F_{loss}}{\partial t} \right)$ für induktive und kapazitive Messmethoden des Sensorkopfes, und

$C(A, f, t) = C_0(func(A, f, t) - F_{loss})$ für optische Messmethoden des Sensorkopfes, wobei

$C_0$ = Korrelationskoeffizient und

$F_{loss}$ = Kraftverlust, der durch die Biegekraft der Membran des Wandlers und Trägheitskraft zustande kommt, und dass die relativen Änderungen $\varepsilon_{rel}$ der Signale ε und $\varepsilon_s$ bestimmt werden, die linear vom Objektvolumen $V_s$ abhängen und für die folgender Zusammenhang gilt:

$$\varepsilon_{rel} = \frac{\varepsilon - \varepsilon_S}{\varepsilon} = \frac{V_S}{V_0} \qquad \text{(Gleichung 8)}$$

Die erfindungsgemäße Vorrichtung zur Durchführung des zuvor dargestellten Verfahrens umfasst einen Messboden, eine verschließbare Messkammer, einen Signalgenerator, Mittel zur Erzeugung und Erfassung von Druckveränderungen in der Messkammer, und umfasst wenigstens einen Wandlerkopf und wenigstens einen Sensorkopf mit zugehöriger Elektronik, wobei der Wandlerkopf einen Wandler mit einer Membran und wenigstens ein Kondensatormikrofon als Drucksensor der Messkammer aufweist, wobei der Signalgenerator den Wandler zur Erzeugung von Signalen (ε, $\varepsilon_s$) in der Messkammer speist, wobei der Sensorkopf induktive, kapazitive oder optische Messeigenschaften hat und mit der zugehörigen Elektronik eine Bewegungsänderung der Membran misst und wobei der Signalgenerator und der Wandlerkopf derart konfiguriert sind, die Schritte des erfindungsgemäßen Verfahrens durchzuführen.

Mit dem erfindungsgemäßen Verfahren und der Vorrichtung ist es nunmehr möglich, eine gegenüber dem Stand der Technik technisch einfach aufgebaute Vorrichtung und ein Verfahren bereitzustellen, mit der/dem eine präzise und schnelle Messung des Gesamtvolumens oder des wahren Volumens von regelmäßig und unregelmäßig geformten Objekten möglich ist. So ist es weiterhin möglich auch das Gesamtvolumen oder wahre Volumen einer Gruppe von Objekten, zum Beispiel Schüttgut, zu bestimmen, sowie auch das Gesamtvolumen dieser Objekte zusammen mit dem in den Poren befindlichen Volumen zu bestimmen. Mit dem erfindungsgemäßen Verfahren und der Vorrichtung ist es weiterhin auch möglich, die Porosität von Objekten zu bestimmen.

Unter der Bezeichnung "Gesamtvolumen" ist im Rahmen der Erfindung das Volumen zu verstehen, das das Volumen des Festkörpers des Objekts umfasst, zusammen mit dem Volumen möglicher Hohlräume, die das Objekt beinhaltet oder die das Objekt umgeben, wie zum Beispiel die Zwischenräume von Objekten, die im Schüttgut angeordnet sind, oder Poren, die das Objekt aufweist oder auch einen Hohlraum, der von einer Hülle des Objekts umgeben wird.

Unter der Bezeichnung "wahres Volumen" ist demgegenüber das Volumen eines Objekts zu verstehen, welches das reine Volumen des Objekts ohne das Volumen möglicher Hohlräume (zum Beispiel von Poren oder Zwischenräumen) umfasst.

Hohlräume können nur gemessen werden, wenn sie von außen zugänglich sind. In das Objekt komplett eingeschlossene Hohlräume können daher nicht erfasst werden.

Vorteilhafte Weiterbildungen der Erfindung sind in den Unteransprüchen angegeben.

Die Erfindung wird nachfolgend anhand der Figuren erläutert. Die Figuren zeigen beispielhaft Ausführungsformen der Erfindung, ohne dass dies einschränkend auszulegen ist.

Es zeigt:

Fig. 1a: Schematischer allgemeiner Aufbau der erfindungsgemäßen Vorrichtung

Fig. 1b: Schalenförmiger Einsatz zur Aufnahme von Objekten

Fig. 1c: Netzförmiger Korbeinsatz zur Aufnahme von Objekten

Fig.2: Schematische Ansichten von unterschiedlich möglichen Messansätzen

Fig.3: Schematische Darstellung des gemessenen Relativsignals multipliziert mit dem Innenvolumen der Kammer in Abhängigkeit von der normalisierten Betriebsfrequenz

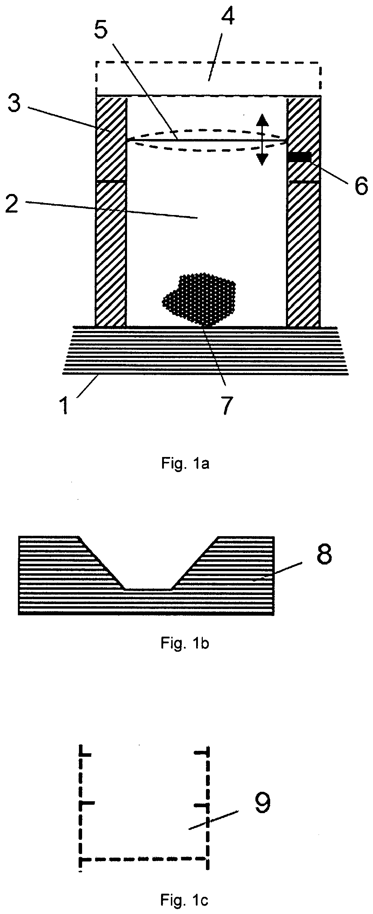

Figur 1a zeigt eine schematische Ansicht der erfindungsgemäßen Vorrichtung. Auf dem Messboden **1** befindet sich das zu untersuchende Objekt **7**. Das Objekt **7** ist von der Messkammer **2** umgeben. Diese Messkammer **2** umfasst einen Wandlerkopf **3** mit einem elektromechanischen Wandler **5** und einem optionalen Drucksensor **6**. Mit dem Wandler **5** ist ein Sensorkopf **4** verbunden. In die Messkammer **2** können entweder wenigstens ein oder mehrere Objekte **7** direkt eingebracht werden.

In Figur 1b ist ein schalenförmiger Einsatz **8** mit einer Vertiefung in der Mitte dargestellt.

In Figur 1c ist ein poröser oder netzartiger Korb **9** dargestellt.

Dieser schalenförmige Einsatz **8** oder Korbeinsatz **9** kann verwendet werden, um mehrere Objekte **7** gleichzeitig in der erfindungsgemäßen Vorrichtung zu vermessen. Diese Einsätze **8** und **9** werden entweder als Ersatz für den Messboden **1** eingesetzt oder auf den Messboden **1** in die Messkammer **2** gestellt.

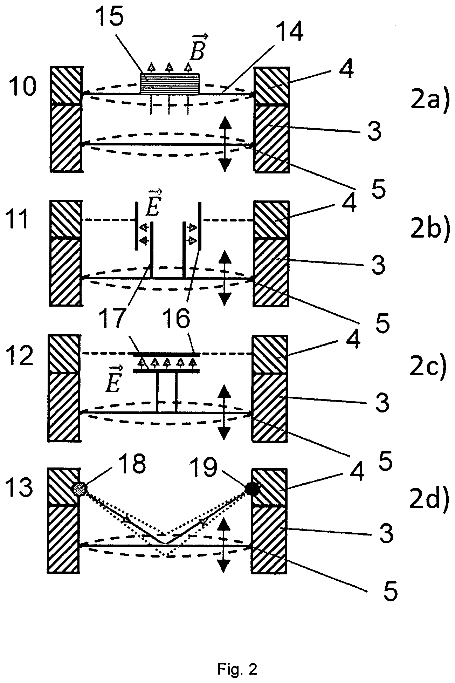

Figur 2 zeigt beispielhaft schematische Ansichten 2a), 2b), 2c), 2d) von Sensorköpfen **4**, bei denen verschiedene Messansätze 10, 11, 12, 13 zum Erfassen der mechanischen Bewegungen der Membran des Wandlers **5** dargestellt sind. Das Symbol "B" in Figur 2a) bedeutet hier die magnetische Flussdichte. Das Symbol "E" in Figur 2b) und 2c) bedeutet hier die elektrische Feldstärke.

Ausführung 10 in Figur 2a) zeigt einen induktiven Messansatz. Ausführung 11 und 12 in Figur 2b) und 2c) zeigen einen kapazitiven Messansatz und Ausführung 13 in Figur 2d) zeigt einen optischen Messansatz.

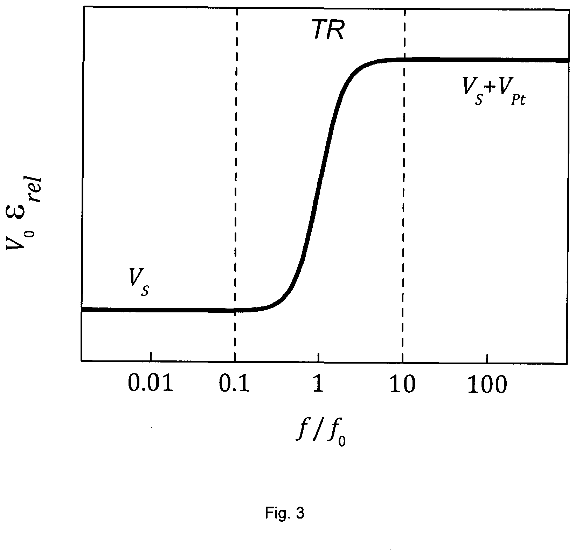

Figur 3 zeigt die schematische Darstellung des gemessenen Relativsignals $\varepsilon_{rel}$ multipliziert mit dem Innenvolumen (Leervolumen) $V_0$ der Messkammer in Abhängigkeit von der normalisierten Betriebsfrequenz $f/f_0$, wobei die Abszissenachse die normalisierte Betriebsfrequenz $f/f_0$ wiedergibt und die Ordinatenachse die Werte des gemessenen Relativsignals $\varepsilon_{rel}$ multipliziert mit dem Innenvolumen (Leevolumen) $V_0$ der Messkammer wiedergibt. Die Bezeichnung "TR" im Kurvenverlauf kennzeichnet den Übergangsbereich.

Die folgende Beschreibung der bevorzugten Ausführungsformen ist rein beispielhafter Natur und ist nicht dazu gedacht, die Erfindung, ihre Anwendung oder ihren Gebrauch zu beschränken.

Eine vorteilhafte Ausführung der erfindungsgemäßen Vorrichtung gemäß Figur 1a besteht aus einem Messboden **1**, einer Messkammer **2**, einem Wandlerkopf **3** und einem Sensorkopf **4**.

Durch den Aufbau der Vorrichtung mit nur einer Messkammer **2**, kann das Volumen eines Objektes **7** oder mehrerer Objekte **7,** die auf dem Messboden **1** aufliegen, direkt gemessen werden. Die Ausgestaltung der Vorrichtung mit nur einer Messkammer **2** hat den Vorteil, dass die Messbedingungen innerhalb dieser einen Messkammer **2** konstant gehalten werden können und es bei Veränderungen der Messbedingungen nicht zu Messfehlern kommt. Letztere können entstehen, wenn beispielsweise, wie nach dem Stand der Technik bekannt, eine Messkammer und eine separate Referenzkammer eingesetzt werden; hierbei können sich die Bedingungen in den beiden Kammern unterschiedlich ändern, wodurch die Kammern nicht mehr miteinander verglichen werden können, was wiederum zu Messfehlern führt. Die Messkammer **2** kann vorteilhaft leicht mit dem Messboden 1 verschlossen werden. Dazu reicht beispielsweise das Eigengewicht der Messkammer **2** aus, um die Vorrichtung ausreichend mit dem Messboden **1** zu verschließen.

In dem Wandlerkopf **3** sind ein elektromechanischer Wandler **5** mit einer Membran und optional auch ein Drucksensor **6** eingebaut. Der Doppelpfeil in Figur 1a zeigt die Auf- und Ab-Bewegung der Membran des Wandlers **5** an. Die Membran des Wandlers **5** erzeugt durch die Auf- und Ab-Bewegung eine Volumenänderung in der Messkammer **2.** Als elektromechanischer Wandler 5 können beispielsweise verschiedene Arten von Lautsprechern oder Mikrofonen eingesetzt werden. Hier können beispielsweise kapazitive Kondensator-Mikrofone oder induktive Mikrofone eingesetzt werden.

Der Drucksensor **6** dient der Druckkontrolle in der Vorrichtung und sorgt dafür, dass insbesondere bei Messungen, bei denen unterschiedliche Frequenzen eingesetzt werden, ein nahezu gleicher Druck in der Messkammer **2** vorherrscht und zwar sowohl, wenn in der Messkammer **2** ohne Objekt **7** als auch mit Objekt **7** gemessen wird.

Dieser nahezu gleiche Druck wird dadurch erreicht, dass die Amplitude oder der Strom des Lautsprechers des elektromechanischen Wandlers **5** so verändert wird, dass der Druck bei Messungen mit und ohne Objekt bei unterschiedlichen Frequenzen nahezu gleich bleibt.

Der Drucksensor **6** vermindert weiterhin das Entstehen von Resonanzen.

Dieser Drucksensor **6** und die Einstellung der nahezu gleichen Druckverhältnisse spielt insbesondere dann eine wichtige Rolle, wenn die Porosität von Objekten bestimmt werden soll, die über einen gegenüber dem Stand der Technik großen Frequenzbereich zwischen 20 bis 6000 Hz gemessen werden kann.

Eine austauschbare Messkammer **2** ist nach oben hin offen, um einen Luftanschluss an die Membran des Wandlers **5** zu gewährleisten, wobei sie vorzugsweise gasdicht mit dem Gehäuse des Wandlerkopfes **3** verbunden ist. Die Messkammer **2** ist auch nach unten hin offen und kann ebenfalls gasdicht auf den Messboden 1, auf dem das Objekt **7** liegt, aufgesetzt werden. Als Messboden **1** kann beispielsweise ein Labortisch, ein ebenes festes Material oder auch eine Wägeschale eingesetzt werden, für den Fall, dass die Vorrichtung für pyknometrische Messungen verwendet werden soll.

Der Wandler **5** sorgt in der Messkammer **2** für eine alternierende Kompression und Expansion der Luft oder des Gases in der Messkammer 2. Der Sensorkopf **4,** der die Bewegungen der Membran des Wandlers **5** direkt oder indirekt erfasst, ist in der Regel mit der anderen Seite des Gehäuses des Wandlerkopfes **3** verbunden. Je nach Art des Sensorkopfes **4** kann dieser aber auch zwischen dem Gehäuse des Wandlerkopfes **3** und der Messkammer **2** angeordnet sein. Für den Wandler **5** kann beispielsweise ein handelsüblicher Lautsprecher verwendet werden.

Ein schalenförmiger Einsatz **8** mit einer Vertiefung in der Mitte oder ein poröser oder netzartiger Korb **9** kann verwendet werden, um mehrere Objekte **7** gleichzeitig zu messen. Je nach Anwendungsfall kann der schalenförmige Einsatz **8** mit der Vertiefung in der Mitte den Messboden **1** ersetzen. Alternativ kann der Korb **9** zusammen mit den darin befindlichen Objekten 7 in die Messkammer **2** eingeführt werden.

Der Wandler **5** kann ein elektromechanischer Wandler sein, der durch einen elektronischen Signalgenerator (zum Beispiel einem Digital-Analog-Wandler, DAC) gespeist wird. Der Signalgenerator wiederum kann beispielsweise von einem Mikrocontroller oder einem Computer angesteuert werden. Der Kompressions- bzw. Expansionsdruck in der Messkammer **2** hängt von der Amplitude des vom Signalgenerator des Wandlers **5** erzeugten Signals ab. Um den Druck innerhalb der Messkammer bei unterschiedlichen Frequenzen konstant zu halten und um Messungenauigkeiten zu vermeiden, die durch mögliche Druckschwankungen in der Messkammer insbesondere bei verschiedenen Betriebsfrequenzen auftreten können, wird der Druck, wie bereits schon oben dargestellt, durch einen Drucksensor **6** aufgenommen. Der Drucksensor **6** sollte das Volumen der Messkammer **2** möglichst nicht verändern, was beispielsweise mit einem Kondensatormikrofon realisiert werden kann. So kann durch den Drucksensor **6** der Druck in der Messkammer **2** konstant gehalten werden, wenn bei mehreren unterschiedlichen Frequenzen sowohl mit als auch ohne ein Objekt **7** gemessen wird.

Durch den Einsatz eines Drucksensors **6,** der zur Regelung der Amplitude des Wandlers 5 genutzt wird, kann auch das Entstehen von Resonanzschwingungen vermindert werden.

Der Sensorkopf **4** hat die Aufgabe, die Bewegungen der Membran des Wandlers **5** direkt oder indirekt zu messen.

Der Sensorkopf **4** kann zum Beispiel verschiedene in Figur 2a) bis 2d) dargestellte Messansätze oder Messeigenschaften umfassen: induktiv **10,** kapazitiv **11** oder **12** und optisch **13.**

Bei dem induktiven Messansatz **10** ist der Sensorkopf **4** fest mit dem Gehäuse des Wandlerkopfes **3** verbunden, ausgeführt als dynamisches Mikrofon, bestehend aus Membran **14** und Spule **15.** Die Spule **15** kann alternativ auch direkt auf der Membran des Wandlers **5** befestigt werden. Die einfachsten Beispiele der Membran **14** mit der Spule **15** sind ein induktives Mikrofon oder ein Lautsprecher mit leichter und leicht zu bewegender Membran, um die Belastung der Membran des Wandlers **5** möglichst klein zu halten. Durch die Bewegung der Membran des Wandlers **5** kommt es zur Bewegung der Membran **14** des Sensorkopfes. Die induzierte Spannung kann an der Spule **15** gemessen werden.

Bei den genannten kapazitiven Messansätzen **11** und **12** bildet eine feste Platte **16** mit einer an der Membran des Wandlers **5** befestigten Platte **17** eine variable Kapazität. Mit der Änderung der Kapazität ändert sich die Feldstärke "E" (Prinzip eines Kondensatormikrofons).

Beim optischen Messansatz **13** emittiert eine Lichtquelle **18** Licht, das von der Membran des Wandlers **5** zu einem Fotosensor **19** reflektiert wird. Die dabei erfassbaren Phasen- und Intensitätsänderungen, die durch die Bewegungen der Membran des Wandlers **5** verursacht werden, dienen zur Bestimmung der Membranposition.

In Figur 3 ist beispielhaft und schematisch das gemessene Relativsignal $\varepsilon_{rel}$ multipliziert mit dem Innenvolumen $V_0$ der Messkammer **2**, in Abhängigkeit von der normierten Betriebsfrequenz $f/f_0$ des an der Membran des Wandlers **5** anliegenden Sinussignals dargestellt.

Hier korrelieren die Frequenz $f$ mit der Geschwindigkeit der Bewegungen der Membran des Wandlers **5,** und $\varepsilon_{rel}$ ist unter Verwendung von Effektivwerten der gemessenen Signale $\varepsilon$ und $\varepsilon_s$ berechnet (siehe Gleichung 8 weiter unten).

Bei Frequenzen, die höher als die Übergangsfrequenz $f_0$ sind, hat die Luft/das Gas aufgrund ihrer Viskosität in der Messkammer **2** keine Zeit, in die Poren des Objekts **7** einzudringen. In diesem Fall wird das Gesamtvolumen $V_{ges}$ = $V_S+V_{Pt}$, also das eigentliche ("wahre") Volumen $V_S$ des Objekts **7** zusammen mit dem seiner potentiell vorhandenen Poren oder Hohlräumen $V_{Pt}$, gemessen. Das Verhalten des Übergangsbereichs TR sowie die Übergangsfrequenz $f_0$ hängen von den physikalischen Größen der Poren bzw. Hohlräume, dem Umgebungsdruck und der Viskosität der Luft in der Messkammer **2** ab.

Das erfindungsgemäße Verfahren wird im Folgenden beispielhaft beschrieben:
Im Betrieb wird der Membran des Wandlers **5** ein periodisches Signal, abhängig von

der Amplitude $A$,
der Frequenz $f$ und
der Zeit $t$,
aufgeprägt, wodurch diese Membran die Kraft Fan die Luft bzw. das Gas in der Messkammer **2** überträgt. Diese Kraft $F$ ist dabei eine Funktion des angelegten Signals, so dass folgende Gleichung 1 gilt:

$$F = func(A, f, t). \qquad \text{(Gleichung 1)}$$

Wenn beispielsweise ein Lautsprecher als Membran des Wandlers **5** verwendet wird, ist $F$ die Lorenz-Kraft und $A$ ist die angelegte Stromamplitude.

Die Kraft $F$ ist auf zwei Teile verteilt: die Verlustkraft, $F_{loss}$, die durch die Biegekraft der Membran und Trägheitskräfte zustande kommt, und die Wirkungskraft $F_{act}$, welche die Luft in der Messkammer **2** durch die erzeugte Druckdifferenz $\Delta p$ komprimiert oder expandiert. Es gilt folgende Gleichung 2:

$$\Delta p = \frac{F_{act}}{S} = \frac{F-F_{loss}}{S}, \qquad \text{(Gleichung 2)}$$

wobei $S$ die Fläche der Membran des Wandlers **5** ist.

Die Messkammer **2** ist im Hinblick auf einen Wärmeaustausch nicht vollständig geschlossen. Bei sehr niedrigen Betriebsfrequenzen, $f \rightarrow 0$, gibt es isotherme Kompression und Expansion; hierbei hat die Luft in der Messkammer **2** genug Zeit, um ihre Temperatur an jeder Position der Messkammer **2** auszugleichen, indem die Wärme mit den Wänden des Sensors ausgetauscht wird.

Im Gegensatz dazu gibt es bei unendlich hohen Frequenzen, $f \rightarrow \infty$, adiabatische Kompression und Expansion; hierbei folgt die Luft der Temperatur der Wände nicht. Dieses sind allerdings nur ideale Extremfälle.

In der Praxis ist es dagegen erforderlich, das quasi-adiabatische Regime des Betriebs der erfindungsgemäßen Vorrichtung mit dem quasi-adiabatischen Index $\gamma_q$ zu betrachten, wobei der Wert von 1 (bei $f \rightarrow 0$) bis zu $\approx 1{,}4$ (bei $f \rightarrow \infty$; d.h. adiabatischer Index für Luft) variiert.

Das quasi-adiabatische Regime kann beschrieben werden als

$$p_a V_0{}^{\gamma_q} = (p_a + \Delta p)(V_0 - \Delta V)^{\gamma_q}, \qquad \text{(Gleichung 3)}$$

mit

$p_a$ = Umgebungsdruck (Atmosphärendruck oder absoluter Druck), bei dem der Sensor arbeitet,

$V_0$ = Innenvolumen der Messkammer **2** und

$\Delta V$ = Volumenänderung, die durch die Bewegung der Membran des Wandlers **5** verursacht wird.

Wenn die Druckänderungen $\Delta p$ im Vergleich zum Umgebungsdruck $p_a$ sehr klein sind, kann die Volumenänderung $\Delta V$ wie folgt berechnet werden

$$\Delta V \approx \frac{1}{\gamma_q} \Delta p \frac{V_0}{p_a}. \qquad \text{(Gleichung 4)}$$

Die Erfindung bezieht sich auf Messungen der Volumenänderungen $\Delta V$ durch verschiedene Techniken, die in einer beispielhaften Ausgestaltung in Figur 2 gezeigt sind. Alle diese Techniken überwachen die Bewegungen der Membran des Wandlers **5**, die in erster Näherung linear mit den Veränderungen von $\Delta V$ korreliert.

Diese Korrelation kann wie folgt geschrieben werden:

$$\Delta V \approx S \Delta l \qquad \text{(Gleichung 5)}$$

mit $\Delta l$ der Auslenkung und S der Fläche der Membran des Wandlers **5**.

Die induktiven **10** und kapazitiven **11, 12** Messansätze zusammen mit der zugehörigen Elektronik erzeugen das Signal $\varepsilon$, das mit der Verschiebungsgeschwindigkeit der Membran des Wandlers **5** korreliert ist. Im Gegensatz dazu hängt $\varepsilon$ beim optischen Messansatz **13** von den Abständen dieser Verschiebungen ab.

In Kombination mit den Gleichungen (1), (2), (4) und (5) kann das Signal $\varepsilon$ wie folgt geschrieben werden:

$$\varepsilon = \frac{V_0}{p_a \gamma_q S^2} C(A, f, t), \qquad \text{(Gleichung 6)}$$

mit $C(A, f, t) = C_0 \left( \frac{\partial func(A,f,t)}{\partial t} - \frac{\partial F_{loss}}{\partial t} \right)$ für die induktiven und kapazitiven Methoden **10-12** und $C(A, f, t) = C_0(func(A, f, t) - F_{loss})$ für die optischen Methoden **13**,

$C_0$ ist hierbei der Korrelationskoeffizient.

Gleichung 6 beschreibt das Signal $\varepsilon$ in der Messkammer **2** ohne Objekt, im Folgenden auch als "Leermessung" bezeichnet.

Zur Messung mit einem Objekt **7** in der erfindungsgemäßen Vorrichtung wird wenigstens ein Objekt **7** mit dem Volumen $V_S$ innerhalb der Messkammer **2** platziert. Das Anwenden derselben Amplitude $A$ und Frequenz $f$ wie in der "Leermessung" führt zu Änderungen des verbleibenden Volumens gegenüber (Gleichung 6), und damit zu einer Änderung des Messsignals, so dass nun folgende Gleichung gilt:

$$\varepsilon_S = \frac{V_0 - V_S}{p_a \gamma_q S^2} C(A, f, t) \qquad \text{(Gleichung 7)}$$

Gleichung 7 beschreibt das Signal $\varepsilon_S$ in der Messkammer **2** mit Objekt, im Folgenden auch als "Objektmessung" bezeichnet.

Die Erfindung misst die relativen Änderungen $\varepsilon_{rel}$ der Signale $\varepsilon$ und $\varepsilon_s$, die linear vom Objektvolumen $V_S$ abhängen, so dass gilt:

$$\varepsilon_{rel} = \frac{\varepsilon - \varepsilon_S}{\varepsilon} = \frac{V_s}{V_0}. \qquad \text{(Gleichung 8)}$$

Die Messkammer **2** kann je nach Anwendung auch mit wünschenswerten anderen Gasen (z.B. Argon, Stickstoff, Kohlendioxid, Sauerstoff) als Luft gefüllt sein, solange diese für die Materialien der erfindungsgemäßen Vorrichtung unschädlich sind und nicht mit dem Material des Objekts **7** oder den Bestandteilen der Vorrichtung eine chemische Reaktion eingehen.

Die Erfindung schließt in einer besonders vorteilhaften Ausführung der Vorrichtung und des Verfahrens die Messung der Porosität eines Objektes mit ein.

Bei einer von Null verschiedenen Viskosität der Luft oder des Gases, welche bzw. welches die Poren oder Hohlräume des Objekts **7** in der Messkammer **2** füllt, werden von der erfindungsgemäßen Vorrichtung unterschiedliche Volumina bei verschiedenen Frequenzen erfasst.

Bei kleinen Frequenzen ist die Geschwindigkeit der Bewegungen der Membran des Wandlers **5** klein genug, so dass die Luft oder das Gas innerhalb der Poren auf die Änderungen des Drucks in der Messkammer **2** reagieren kann. In diesem Fall wird das eigentliche "wahre" Volumen $V_S$ des Objekts **7** ohne potentielle Luft- oder Gaseinschlüsse gemessen. Letztere können allerdings nur dann erfasst oder ausgeblendet werden, wenn sie zur Oberfläche des Objektes geöffnet sind. Wie in Figur 3 dargestellt, liegt dieser Frequenzbereich vor dem jeweiligen Übergangsbereich "TR", der für die Luft bzw. das verwendete Gas in der Messkammer vorherrscht.

Wenn die Frequenz der Membranbewegungen dagegen so hoch ist, dass die Luft oder das Gas innerhalb der Poren auf die Druckänderungen aufgrund der Reibung mit der Oberfläche des Objekts **7** und zwischen den Luftschichten nicht reagiert, wird das Gesamtvolumen $V_{ges} = V_S + V_{Pt}$ gemessen, wo $V_{Pt}$ das Volumen der Poren ist. Wie in Figur 3 dargestellt, liegt dieser Frequenzbereich oberhalb des jeweiligen Übergangsbereichs "TR" der Luft bzw. des Gases in der Messkammer **2**.

Bei langen, ideal zylindrisch geformten Poren mit dem Radius $r_p$ und der axialen Länge $L_p$ und im Fall einer laminaren Strömung in den Poren ist die Übergangsfrequenz $f_0$ proportional zu Folgendem:

$$f_0 \sim \frac{p_a}{\mu} \frac{r_P^2}{L_P^2}$$

wobei $\mu$ die Viskosität der Luft bzw. des verwendeten Gases beschreibt.

Für einige Porensysteme kann die Übergangsfrequenz $f_0$ dabei beispielsweise wie folgt geschätzt werden:

$$f_0 = \frac{p_a}{16\mu} \frac{r_P^2}{L_P^2}$$

Der Koeffizient im Nenner kann aber beispielsweise auch Werte zwischen 10 bis 16 annehmen.

Die zuvor genannte Gleichung kann bei einem anderen Porensystem abweichen und muss jeweils an das zu untersuchende Porensystem durch experimentelle Untersuchungen angepasst werden. Die Differenz zwischen den gemessenen Volumina bei hohen und niedrigen Frequenzen ergibt das Gesamtvolumen der Poren $V_{Pt} = V_{ges} - V_S$

Der Quotient $\phi = V_{Pt} / (V_S + V_{Pt})$ beschreibt dann die "Porosität" $\phi$ des gemessenen Objekts **7.**

Der Arbeitsfrequenzbereich des erfindungsgemäßen Verfahrens ist durch die Dichtheit der Messkammer **2** bei niedrigen Frequenzen definiert.

Die höchsten Frequenzen sind durch den größten Abstand zwischen zwei Punkten in der Messkammer **2** definiert, wobei die höchste zulässige Frequenz vorzugsweise 4-mal kleiner sein sollte als die Schallgeschwindigkeit in Luft/des Gases geteilt durch diesen Abstand. Ein getesteter Prototyp der erfindungsgemäßen Vorrichtung mit einem Innenvolumen von ca. 1,8 Milliliter kann zum Beispiel im Frequenzbereich von 20 Hz bis 6000 Hz arbeiten.

Die Arbeit bei verschiedenen Frequenzen, beispielsweise $\geq$ 2 Frequenzen, erfordert einen Drucksensor **6**. Der Drucksensor bietet die Möglichkeit, die durch die Bewegungen der Membran des Wandlers **5** hervorgerufenen Druckänderungen, die in Abhängigkeit von der Frequenz unmittelbar das Verhalten der Membran des Wandlers **5** selbst beeinflussen, bei der Messung automatisiert auszugleichen. Der Wandler **5** kann eine Frequenzabhängigkeit aufweisen, die zu unterschiedlichen maximalen Verschiebungen der Membran des Wandlers **5** bei unterschiedlichen Frequenzen führt. Ohne geeignete Kompensation durch den Drucksensor **6** würde dies zu einer falschen Berechnung des Volumens des Objekts **7** führen. Als Drucksensor **6** kann beispielsweise ein Kondensatormikrofon verwendet werden.

Um ein Signal auf den Wandler **5** zu übertragen, kann als ein Beispiel ein Digital-Analog-Wandler (DAC) verwendet werden. Das periodische Signal sollte vorzugsweise sinusförmig sein, da hierbei eine direkte Korrelation zwischen Frequenz und Geschwindigkeit der Bewegungen der Membran des Wandlers **5** gegeben ist. Als Signalleser des Sensorkopfes **4** kann ein Analog-Digital-Wandler (ADC) oder eine vergleichbare Technik verwendet werden. Hierzu sind beispielsweise folgende Techniken geeignet:

- ein Multifunktions-Eingang/Ausgang-Gerät,

- eine externe Soundkarte, beispielsweise mit USB-Anschluss,

- integrierte Soundkarten von Laptops und PCs.

Die erfindungsgemäße Vorrichtung und das Verfahren bieten gegenüber den nach dem Stand der Technik bekannten Vorrichtungen und Verfahren die folgenden Vorteile:

- Die Vorrichtung kann ohne großen Aufwand und kostengünstig produziert werden, indem z.B. handelsübliche Komponenten verwendet werden.

- Technisch einfacher Aufbau der Vorrichtung. Für die einfachste Situation mit einem Betriebsmodus bei nur einer festgelegten Frequenz wird nur eine solide Röhre als Messkammer benötigt und zwei Lautsprecher. Für Mehrfrequenzbetrieb ist zusätzlich noch ein Mikrofon erforderlich. Dies ist beispielsweise ein großer Vorteil gegenüber bekannten akustischen Volumetern.

- Für eine Messung wird nicht notwendigerweise ein Kalibrationsvolumen benötigt. Die Verwendung eines Kalibrationsvolumens kann jedoch vorteilhaft die Präzision einer Messung erhöhen.

- Sie erlaubt schnelle Messungen mit z.B. weniger als 2 Sekunden im Einzelfrequenz-Betriebsmodus, oder weniger als 15 Sekunden, wenn zum Beispiel in einem Frequenzbereich von 20 Hz bis 6000 Hz in 30 Frequenzschritten gemessen wird.

- Sie erlaubt Messungen in einem großen Betriebsfrequenzbereich, z.B. in einer bevorzugten Ausführung im Bereich von 20 Hz bis 6000 Hz, was bevorzugt zur Messung der Porosität eines Objektes genutzt werden kann. Theoretisch kann man im Bereich von 0 Hz bis $75 \times (L[m])^{-1}$ Hz messen, wobei L den größten Abstand zwischen zwei Punkten in einer Messkammer beschreibt.

- Sie umfasst einen großen Messbereich, z.B. in einer getesteten Ausgestaltung zur Vermessung von Saatgut im Volumenbereich von 1 Mikroliter bis zu einigen, beispielsweise 1000, Millilitern.

- Der absolute Messfehler ist klein und konstant. In einer getesteten Ausführung des Volumeters ist der Fehler von ca. 0,5 Mikroliter etwa 3600-mal kleiner (ca. 0.03%) als das interne Volumen der Messkammer (1,8 Milliliter).

- Sie bietet eine einfache Möglichkeit zur Bestimmung der Porosität eines festen Objektes.

- Die Erfindung ist geeignet, um in vollautomatisierte Anlagen zur Volumenbestimmung von Objekten integriert zu werden.

Bei den zu untersuchenden Objekten kann es sich um unterschiedlichste Materialien handeln, die so beschaffen sind, dass sie vorzugsweise fest oder flüssig sind. Geeignete Objekte sind beispielsweise Samenkörner, Blätter, Steine sowie feste oder flüssige Körper jeglicher Geometrie.

Weiterhin kann das zu vermessende Objekt aus einer Zusammensetzung von verschiedenen Objekten oder einer Gruppe von regelmäßig und/oder unregelmäßig geformten Objekten bestehen wie z.B. Sand oder anderem Schüttgut.

Aufgrund der Möglichkeit eine technisch einfach aufgebaute und tragbare Vorrichtung bereitzustellen, die aus mechanischen Standardkomponenten und relativ einfachen Elektronikteilen aufgebaut ist, sind das erfindungsgemäße Verfahren und die Vorrichtung beispielhaft auch für folgende Anwendungsgebiete und Volumenbestimmungen unterschiedlicher Objekte einsetzbar:

- Volumenbestimmung von regelmäßig geformten Objekten;

- Dichtheitsmessung von Hohlkörpern

- Volumenbestimmung von Samen und Messung ihrer Porosität;

- Bestimmung des Gesamtvolumens von vielen Samen und ihrem Füllvolumen;

- Bestimmung des Gesamtvolumens von beliebigem Schüttgut und seinem Füllvolumen;

- in Kombination mit einer Waage, Dichtebestimmung von Objekten und Materialien, beispielsweise im Falle der Dichte von Samen zur Schätzung ihrer Feuchtigkeit oder ihres Ölgehaltes;

- Messungen von kleinen Röhrchen zur Überprüfung der Rauigkeit ihrer Innenflächen;

- in Kombination mit einer Waage, Dichtebestimmung von Eiern, um ihr Alter zu überprüfen, da das Eigewicht und damit die Dichte mit zunehmendem Alter abnimmt;

- Füllzustand von Getreideähren während der Samenreife;

- Messungen an Pflanzenblättern bei geschlossenen oder geöffneten Spaltöffnungen (Stomata), um ihre inneren Hohlräume (Aerenchyme) zu bestimmen, die wichtig für die $CO_2$-Assimilation (Photosynthese) sind;

- Messungen von ganzen Pflanzen, um ihr Volumen als Näherung (Proxy) für ihre Biomasse zu schätzen;

Bezugszeichenliste:

1 = Messboden
2 = Messkammer
3 = Wandlerkopf
4 = Sensorkopf
5 = Wandler
6 = Drucksensor
7 = Objekt
8 = schalenförmiger Einsatz
9 = netzförmiger Korbeinsatz
10 = induktiver Messansatz
11 = kapazitiver Messansatz
12 = kapazitiver Messansatz
13 = optischer Messansatz
14 = Membran
15 = Spule
16 = 1. Platte für variable Kapazität
17 = 2. Platte für variable Kapazität
18 = Lichtquelle
19 = Fotosensor

**Patentansprüche**

1. Verfahren zur Bestimmung des Gesamtvolumens und/oder des wahren Volumens von Objekten (7), bei dem ein Gasraum einer geschlossenen Messkammer (2) durch alternierende Kompression und Expansion des Gases in dem Gasraum der Messkammer (2), verursacht durch einen Wandler (5), komprimiert oder expandiert wird, diese Volumenänderung $\Delta V$ in der Messkammer (2) eine Bewegungsänderung einer Membran eines Wandlers (5) verursacht, wobei die Bewegung dieser Membran des Wandlers (5) linear mit der Volumenänderung $\Delta V$ in der Messkammer (2) korreliert und wobei die mechanische Bewegung dieser Membran des Wandlers (5) als Funktion des Volumens eines Objekts (7) in einer Messkammer (2) durch wenigstens eine Frequenz ausgelöst wird, wobei der Membran des Wandlers (5) ein periodisches Signal aufgeprägt wird, abhängig von der Amplitude $A$, der Frequenz $f$ und der Zeit $t$, wodurch diese Membran eine Kraft $F$, welche die Membran an die Luft bzw. das Gas in der Messkammer (2) überträgt, und wobei die Kraft $F$ eine Funktion des angelegten Signals ist, für die gilt

$$F = func\ (A,\ f,\ t) \qquad \text{(Gleichung1)}$$

und die Bewegungsänderung der Membran durch einen Sensorkopf (4) mit induktiven oder kapazitiven oder optischen Messeigenschaften gemessen wird und wobei für die Volumenänderung $\Delta V$ in der Messkammer (2) die Korrelation beschrieben wird mit

$$\Delta V \approx S \Delta l \qquad \text{(Gleichung 5)}$$

mit

$\Delta V$ = Volumenänderung,
$\Delta L$ = Auslenkung der Membran des Wandlers (5) und
S = Fläche der Membran des Wandlers (5),
wobei zunächst eine Leermessung ohne Objekt (7) in der Messkammer (2) durchgeführt wird, und wobei ein Signal $\varepsilon$ im Messraum (2) ohne Objekt (7) erzeugt wird, das für induktive (10) und kapazitive (11, 12) Messmethoden mit der Verschiebungsgeschwindigkeit der Membran des Wandlers (5) korreliert und für die optische Messmethode (13) von den Abständen dieser Verschiebungen abhängt, **dadurch gekennzeichnet, dass** für dieses Signal $\varepsilon$ ohne Objekt (7) in der Messkammer (2) folgende Gleichung gilt:

$$\varepsilon = \frac{V_0}{p_a \gamma_q S^2} C(A, f, t) \qquad \text{(Gleichung 6)}$$

mit
A = Amplitude,
f = Frequenz,
t = Zeit,
$V_0$ = Innenvolumen der Messkammer (2),
$p_a$ = Umgebungsdruck und
$\gamma_q$ = quasi-adiabatischer Index der Luft/des Gases im Gasraum der Messkammer (2), mit

$$C(A, f, t) = C_0 \left( \frac{\partial func(A,f,t)}{\partial t} - \frac{\partial F_{loss}}{\partial t} \right)$$ für induktive (10) und kapazitive (11,12) Messmethoden des Sensorkopfes (4),
und
$C(A, f, t) = C_0(func(A, f, t) - F_{loss})$ für optische Messmethoden (13) des Sensorkopfes (4),
wobei
$C_0$ = Korrelationskoeffizient und
$F_{loss}$ = Kraftverlust, der durch die Biegekraft der Membran des Wandlers (5) und Trägheitskraft zustande kommt, und dass anschließend wenigstens ein Objekt (7) mit dem Volumen $V_s$ innerhalb der Messkammer (2) platziert wird und ein Signal Es erzeugt wird durch Anwendung derselben Amplitude A und Frequenz f wie bei der Leermessung und, dass für das erzeugte Signal $\varepsilon_s$ folgende Gleichung gilt:

$$\varepsilon_S = \frac{V_0 - V_S}{p_a \gamma_q S^2} C(A, f, t) \qquad \text{(Gleichung 7)}$$

mit $\gamma_q$ = quasi-adiabatischer Index der Luft bzw. des Gases im Gasraum der Messkammer (2) mit

$$C(A, f, t) = C_0 \left( \frac{\partial func(A,f,t)}{\partial t} - \frac{\partial F_{loss}}{\partial t} \right)$$ für induktive (10) und kapazitive (11, 12) Messmethoden des Sensorkopfes (4),
und
$C(A, f, t) = C_0(func(A, f, t) - F_{loss})$ für optische Messmethoden (13) des Sensorkopfes (4), wobei
$C_0$ = Korrelationskoeffizient und
$F_{loss}$ = Kraftverlust, der durch die Biegekraft der Membran des Wandlers (5) und Trägheitskraft zustande kommt, und dass die relativen Änderungen $\varepsilon_{rel}$ der Signale $\varepsilon$ und $\varepsilon_s$ bestimmt werden, die linear vom Objektvolumen $V_s$ abhängen und für die folgender Zusammenhang gilt:

$$\varepsilon_{rel} = \frac{\varepsilon - \varepsilon_S}{\varepsilon} = \frac{V_s}{V_0} \qquad \text{(Gleichung 8)}$$

2. Verfahren nach vorhergehendem Anspruch,

**dadurch gekennzeichnet,**
**dass** die Messung der Bewegungsänderung der Membran des Wandlers (5) mit wenigstens einer Frequenz aus einem Frequenzbereich von > 0 Hz bis $\dfrac{v}{4*L}$ Hz gemessen wird, wobei $L$ den größten Abstand zwischen zwei Punkten in der Messkammer (2) beschreibt und $v$ die Schallgeschwindigkeit des jeweils verwendeten Gases.

3. Verfahren nach einem der vorhergehenden Ansprüche,
   **dadurch gekennzeichnet,**
   **dass** die Messung der Bewegungsänderung der Membran des Wandlers (5) bei mehreren unterschiedlichen Frequenzen durchgeführt wird.

4. Verfahren nach einem der vorhergehenden Ansprüche,
   **dadurch gekennzeichnet,**
   **dass** zur Bestimmung der Porosität wenigstens eines Objekts (7) die Messung der Bewegungsänderung der Membran des Wandlers (5) mit wenigstens ≥2 unterschiedlichen Frequenzen gemessen wird, wobei in einem Frequenzbereich gemessen wird, der zum einen unterhalb des jeweiligen Übergangsbereichs liegt und der zum anderen oberhalb des jeweiligen Übergangsbereichs liegt.

5. Verfahren nach einem der vorhergehenden Ansprüche,
   **dadurch gekennzeichnet,**
   **dass** zur Bestimmung des wahren Volumens eines Objekts (7) wenigstens eine Frequenz eingestellt wird, bei der die Luft oder das Gas in den Poren des Objekts (7) auf die Änderungen des Drucks in der Messkammer (2) reagieren kann.

6. Verfahren nach einem der vorhergehenden Ansprüche,
   **dadurch gekennzeichnet,**
   **dass** zur Bestimmung des Gesamtvolumens eines Objekts (7) wenigstens eine Frequenz eingestellt wird, bei der die Luft oder das Gas in den Poren des Objekts (7) auf die Änderungen des Drucks in der Messkammer (2) nicht reagieren kann.

7. Verfahren nach einem der vorhergehenden Ansprüche,
   **dadurch gekennzeichnet,**
   **dass** es bei Luft und/oder Gas in der Messkammer (2) durchgeführt wird, wobei die Gase keine chemische Reaktion mit den Bestandteilen der Vorrichtung oder des zu messenden Objektes (7) eingehen.

8. Verfahren nach einem der vorhergehenden Ansprüche,
   **dadurch gekennzeichnet,**
   **dass** es bei einer Messung mit einer Einzelfrequenz mit einer Betriebszeit von < 2 Sekunden durchgeführt wird.

9. Verfahren nach einem der vorhergehenden Ansprüche,
   **dadurch gekennzeichnet,**
   **dass** es bei einer Messung mit verschiedenen Frequenzen, insbesondere in 30 Frequenzschritten, mit einer Betriebszeit von < 15 Sekunden durchgeführt wird.

10. Verfahren nach einem der vorhergehenden Ansprüche,
    **dadurch gekennzeichnet,**
    **dass** Objekte (7) mit einem Volumenbereich von 1 Mikroliter bis 1000 Millilitern vermessen werden.

11. Vorrichtung zur Durchführung des Verfahrens nach einem der Ansprüche 1 bis 10 umfassend einen Messboden (1), eine verschließbare Messkammer (2), einen Signalgenerator, Mittel zur Erzeugung und Erfassung von Druckveränderungen in der Messkammer (2), umfassend wenigstens einen Wandlerkopf (3) und wenigstens einen Sensorkopf (4) mit zugehöriger Elektronik wobei der Wandlerkopf (3) einen Wandler (5) mit einer Membran und wenigstens ein Kondensatormikrofon als Drucksensor (6) der Messkammer aufweist, wobei der Signalgenerator den Wandler (5) zur Erzeugung von Signalen ($\varepsilon$, $\varepsilon_s$) in der Messkammer (2) speist, wobei der Sensorkopf (4) induktive, kapazitive oder optische Messeigenschaften hat und mit der zugehörigen Elektronik eine Bewegungsänderung der Membran misst und wobei der Signalgenerator und der Wandlerkopf (3) derart konfiguriert sind, die Schritte des Verfahrens nach Anspruch 1 bis 10 durchzuführen.

**12.** Vorrichtung nach vorhergehendem Anspruch,
**dadurch gekennzeichnet,**
**dass** der Wandler (5) ein Lautsprecher ist.

**13.** Vorrichtung nach einem der vorhergehenden Ansprüche 11 bis 12,
**dadurch gekennzeichnet,**
**dass** der Wandler (5) ein elektromechanischer Wandler ist, der durch einen elektronischen Signalgenerator gespeist ist.

**14.** Vorrichtung nach einem der vorhergehenden Ansprüche 11 bis 13,
**dadurch gekennzeichnet,**
**dass** die Messkammer (2) mit Luft und/oder unterschiedlichen Gasen gefüllt ist, die keine chemische Reaktion mit den Bestandteilen der Vorrichtung oder dem zu messenden Objekt eingehen.

**15.** Vorrichtung nach einem der vorhergehenden Ansprüche 11 bis 14,
**dadurch gekennzeichnet,**
**dass** die Messkammer (2) durch ihr Eigengewicht mit dem Messboden (1) verschließbar ist.

**16.** Vorrichtung nach einem der vorhergehenden Ansprüche 11 bis 15,
**dadurch gekennzeichnet,**
**dass** der Sensorkopf (4) induktive, kapazitive und optische Messeigenschaften hat.

**17.** Vorrichtung nach einem der Ansprüche 11 bis 16,
**dadurch gekennzeichnet,**
**dass** der Sensorkopf (4) mit induktiven Messeigenschaften fest mit dem Gehäuse des Wandlerkopfes (3) verbunden ist und als dynamisches Mikrofon bestehend aus Membran (14) und Spule (15) ausgestaltet ist.

**18.** Vorrichtung nach vorhergehendem Anspruch 17,
**dadurch gekennzeichnet,**
**dass** die Spule (15) direkt auf der Membran des Wandlers (5) befestigt ist.

**19.** Vorrichtung nach einem der Ansprüche 11 bis 16,
**dadurch gekennzeichnet,**
**dass** der Sensorkopf (4) mit kapazitiven Messeigenschaften wenigstens eine erste Platte (16) einer variablen Kapazität umfasst, die an dem Gehäuse des Sensorkopfs (4) befestigt ist und wenigstens eine zweite Platte (17) mit der Membran des Wandlers (5) verbunden ist.

**20.** Vorrichtung nach einem der Ansprüche 11 bis 16,
**dadurch gekennzeichnet,**
**dass** der Sensorkopf (4) mit optischen Messeigenschaften eine Lichtquelle (18) und einen Fotosensor (19) umfasst, wobei das von der Lichtquelle (18) emittierte Licht von der Membran des Wandlers (5) zu dem Fotosensor (19) reflektiert ist.

**21.** Vorrichtung nach einem der vorhergehenden Ansprüche 11 bis 20,
**dadurch gekennzeichnet,**
**dass** sie netz- oder korbartige Einsätze (8, 9) zur Aufnahme von mehreren Objekten (7) umfasst.

**22.** Vorrichtung nach einem der vorhergehenden Ansprüche 11 bis 21,
**dadurch gekennzeichnet,**
**dass** sie eine Wägeeinheit umfasst.


**Claims**

**1.** A method for determining the total volume and/or the true volume of objects (7), wherein a gas space of a closed measuring chamber (2) is compressed or expanded by alternating compression and expansion of the gas in the gas space of said measuring chamber (2) caused by a converter (5), said change in volume $\Delta V$ in the measuring chamber (2) causing a change in motion of a membrane of a converter (5), wherein the motion of said membrane of the converter (5) linearly correlates with the change in volume $\Delta V$ in the measuring chamber (2), and wherein the mechanical motion of said membrane of the converter (5), as a function of the volume of an object (7) in a measuring chamber (2), is triggered by at least one frequency, wherein the membrane of the converter (5) is embossed with a periodic signal dependent upon amplitude $A$, frequency $f$ and time $t$, said membrane thereby transmitting a force $F$, which the membrane transmits to the air or the gas in the measuring chamber (2), and wherein the force $F$ is a function of the applied signal, whereto the following applies:

$$F = func\ (A, f, t) \qquad (equation\ 1)$$

and the change in motion of the membrane is measured by a sensor head (4) with inductive or capacitive or optical measurement characteristics, and wherein, for the change in volume $\Delta V$ in the measuring chamber (2), the correlation is described as follows:

$$\Delta V \approx S\Delta l \qquad (equation\ 5)$$

wherein

$\Delta V$ = change in volume
$\Delta L$ = deflection of the membrane of the converter (5) and
S = surface of the membrane of the converter (5),
wherein an empty measurement with no object (7) in the measuring chamber (2) is performed initially, and wherein a signal $\varepsilon$ is generated in the measuring chamber (2) with no object (7), correlating with the translation speed of the membrane of the converter (5) for inductive (10) and capacitive (11, 12) measuring methods and dependent upon the distances of said translations for the optical measuring method (13), **characterised in that**, to said signal $\varepsilon$ with no object (7) in the measuring chamber (2), the following equation applies:

$$\varepsilon = \frac{V_0}{p_\alpha \gamma_q S^2}\ C(A, f, t) \qquad (equation\ 6)$$

wherein
$A$ = amplitude,
$f$ = frequency,
$t$ = time,
$V_0$ = internal volume of the measuring chamber (2),
$p_\alpha$ = ambient pressure and
$\gamma_q$ = quasi-adiabatic index of the air/the gas in the gas space of the measuring chamber (2), wherein

$$C(A, f, t) = C_0 \left[ \frac{\partial func(A, f, t)}{\partial t} - \frac{\partial F_{loss}}{\partial t} \right] \quad \text{for inductive (10) and capacitive}$$

(11, 12) measuring methods of the sensor head (4), and
$C(A, f, t) = C_0(func(A, f, t) - F_{loss})$ for optical measuring methods (13) of the sensor head (4),
wherein
$C_0$ = correlation coefficient and
$F_{loss}$ = loss of force arising from the bending force of the membrane of the converter (5) and inertial force, and **in that**, subsequently, at least one object (7) with a volume of $Vs$ is placed inside the measuring chamber (2) and a signal $\varepsilon_s$ is generated by applying the same amplitude $A$ and frequency $f$ as with the empty measurement, and **in that**, to the generated signal $\varepsilon_s$, the following equation applies:

$$\varepsilon_S = \frac{V_0 - V_S}{p_a \gamma_q S^2} \; C(A, f, t) \quad \text{(equation 7)}$$

wherein $\gamma_q$ = quasi-adiabatic index of the air or the gas in the gas space of the measuring chamber (2), wherein

$$C(A, f, t) = C_0 \left[ \frac{\partial func(A, f, t)}{\partial t} - \frac{\partial F_{loss}}{\partial t} \right]$$ for inductive (10) and capacitive (11, 12) measuring methods of the sensor head (4), and
$C(A, f, t) = C_0(func(A, f, t) - F_{loss})$ for optical measuring methods (13) of the sensor head (4), wherein
$C_0$ = correlation coefficient and
$F_{loss}$ = loss of force arising from the bending force of the membrane of the converter (5) and inertial force,
and **in that** the relative changes $\varepsilon_{rel}$ of the signals $\varepsilon$ and $\varepsilon_s$ are determined, which are linearly dependent upon the object volume $V_s$ and whereto the following relation applies:

$$\varepsilon_{rel} = \frac{\varepsilon - \varepsilon_S}{\varepsilon} = \frac{V_S}{V_0} \quad \text{(equation 8)}$$

2. The method in accordance with the preceding claim,
   **characterised in that**
   the measurement of the change in motion of the membrane of the converter (5) is measured at at least one frequency from a frequency range of >0 Hz to $\dfrac{v}{4 * L}$ Hz, wherein L describes the longest distance between two points in the measuring chamber (2) and v describes the acoustic velocity of the respective gases used.

3. The method in accordance with one of the preceding claims,
   **characterised in that**
   the measurement of the change in motion of the membrane of the converter (5) is performed at a plurality of different frequencies.

4. The method in accordance with one of the preceding claims,
   **characterised in that**,
   for determining the porosity of at least one object (7), the measurement of the change in motion of the membrane of the converter (5) is measured at at least $\geq 2$ different frequencies, wherein measurement is carried out in a frequency range that is, on the one hand, below the respective transitional range and, on the other hand, above the respective transitional range.

5. The method in accordance with one of the preceding claims,
   **characterised in that**,
   for determining the true volume of an object (7), at least one frequency is set whereat the air or gas in the pores of the object (7) is able to react to the changes in pressure in the measuring chamber (2).

6. The method in accordance with one of the preceding claims,
   **characterised in that**,
   for determining the total volume of an object (7), at least one frequency is set whereat the air of gas in the pores of the object (7) is unable to react to the changes in pressure in the measuring chamber (2).

7. The method in accordance with one of the preceding claims,
   **characterised by**
   being performed with air and/or gas in the measuring chamber (2), wherein the gases do not enter into a chemical reaction with the components of the device or of the to-be-measured object (7).

8. The method in accordance with one of the preceding claims,

**characterised by**
being performed, in a measurement with a single frequency, with an operation period of <2 seconds.

9. The method in accordance with one of the preceding claims,
**characterised by**
being performed, in a measurement with a plurality of frequencies, particularly in 30 frequency steps, with an operation period of <15 seconds.

10. The method in accordance with one of the preceding claims,
**characterised in that**
objects (7) with a volume range of 1 microlitre to 1,000 millilitres are measured.

11. A device for performing the method in accordance with one of claims 1 to 10, comprising a measuring base (1), a closable measuring chamber (2), a signal generator, means for generating and registering pressure changes in the measuring chamber (2), comprising at least one converter head (3) and at least one sensor head (4) with associated electronics,
wherein the converter head (3) has a converter (5) with a membrane and at least one capacitor microphone as a pressure sensor (6) of the measuring chamber, wherein the signal generator feeds the converter (5) for generating signals ($\varepsilon$, $\varepsilon_s$) in the measuring chamber (2), wherein the sensor head (4) has inductive, capacitive or optical measurement characteristics and, with the associated electronics, measures a change in motion of the membrane, and wherein the signal generator and the converter head (3) are thus configured to perform the steps of the method in accordance with claims 1 to 10.

12. The device in accordance with the preceding claim,
**characterised in that**
the converter (5) is a loudspeaker.

13. The device in accordance with one of the preceding claims 11 to 12,
**characterised in that**
the converter (5) is an electromechanical converter being fed by an electronic signal generator.

14. The device in accordance with one of the preceding claims 11 to 13,
**characterised in that**
the measuring chamber (2) is filled with air and/or sundry gases, which do not enter into a chemical reaction with the components of the device or with the to-be-measured object.

15. The device in accordance with one of the preceding claims 11 to 14,
**characterised in that**
the measuring chamber (2) is closable with the measuring base (1) by its own weight.

16. The device in accordance with one of the preceding claims 11 to 15,
**characterised in that**
the sensor head (4) has inductive, capacitive and optical measurement characteristics.

17. The device in accordance with one of the claims 11 to 16,
**characterised in that**
the sensor head (4) with inductive measurement characteristics is rigidly connected to the encasement of the converter head (3) and is designed as a dynamic microphone consisting of a membrane (14) and a coil (15).

18. The device in accordance with the preceding claim 17,
**characterised in that**
the coil (15) is attached directly to the membrane of the converter (5).

19. The device in accordance with one of the claims 11 to 16,
**characterised in that**
the sensor head (4) with capacitive measurement characteristics comprises at least a first panel (16) with a variable capacity, which is attached to the encasement of the sensor head (4), and at least a second panel (17) is connected to the membrane of the converter (5).

**20.** The device in accordance with one of the claims 11 to 16,
**characterised in that**
the sensor head (4) with optical measurement characteristics comprises a light source (18) and a photosensor (19), wherein the light emitted by the light source (18) is reflected by the membrane of the converter (5) to the photosensor (19).

**21.** The device in accordance with one of the preceding claims 11 to 20,
**characterised by**
comprising net-shaped or basket-shaped inserts (8, 9) for accommodating a plurality of objects (7).

**22.** The device in accordance with one of the preceding claims 11 to 21,
**characterised by**
comprising a measuring unit.

**Revendications**

**1.** Procédé de détermination du volume total et/ou du volume vrai d'objets (7), dans lequel on comprime ou on dilate, par un convertisseur (5), un espace pour du gaz d'une chambre (2) de mesure fermée par compression et détente alternées du gaz dans l'espace pour du gaz de la chambre (2) de mesure, cette variation $\Delta V$ de volume de la chambre (2) de mesure provoque une variation de déplacement d'une membrane d'un convertisseur (5), dans lequel on met le déplacement de cette membrane du convertisseur (5) en corrélation linéaire avec la variation $\Delta V$ de volume de la chambre (2) de mesure et dans lequel on déclenche le mouvement mécanique de cette membrane du convertisseur (5) en fonction du volume d'un objet (7) dans une chambre (2) de mesure par au moins une fréquence, dans lequel on imprime, à la membrane du convertisseur (5), un signal périodique, en fonction de l'amplitude $A$, de la fréquence $f$ et du temps $t$, grâce à quoi il est appliqué à cette membrane une force $F$, que la membrane transmet à l'air ou au gaz dans la chambre (2) de mesure, et dans lequel la force $F$ est une fonction du signal appliqué, pour laquelle on a

$$F = func \ (A, \ f, \ t) \qquad\qquad (\text{équation 1})$$

et on mesure la variation de déplacement de la membrane par une tête (4) de capteur ayant des propriétés de mesure inductives ou capacitives ou optiques et dans lequel on décrit, pour la variation $\Delta V$ de volume de la chambre (2) de mesure, la corrélation par

$$\Delta V \approx S \Delta l \qquad\qquad (\text{équation 5})$$

avec

$\Delta V$ = variation de volume
$\Delta L$ = excursion de la membrane du convertisseur (5) et
$S$ = surface de la membrane du convertisseur (5),
dans lequel on effectue d'abord une mesure à vide sans objet (7) dans la chambre (2) de mesure, et dans lequel on produit, dans la chambre (2) de mesure sans objet (7), un signal $\varepsilon$ que l'on met, pour des procédés de mesure inductifs (10) et capacitifs (11, 12), en corrélation avec la vitesse de déplacement de la membrane du convertisseur (5) et qui, pour les procédés (13) de mesure optiques, dépend des distances de ces déplacements,
**caractérisé en ce que**, pour ce signal $\varepsilon$ sans objet (7) dans la chambre (2) de mesure, on a l'équation suivante :

$$\varepsilon = \frac{V_0}{p_a \gamma_q S^2} C(A, f, t) \qquad\qquad (\text{équation 6})$$

avec
$A$ = amplitude
$f$ = fréquence

$t$ = temps

$V_0$ = volume intérieur de la chambre (2) de mesure

$p_a$ = pression ambiante et

$\gamma_q$ = indice quasi-adiabatique de l'air / du gaz dans l'espace pour le gaz de la chambre (2) de mesure avec

$$C(A, f, t) = C_0 \left( \frac{\partial func(A, f, t)}{\partial t} - \frac{\partial F_{loss}}{\partial t} \right)$$ pour des procédés de mesure inductifs (10) et capacitifs (11, 12) de la tête (4) de mesure,

et

$C(A, f, t) = C_0(func(A, f, t) - F_{loss})$ pour des procédés (13) de mesure optiques de la tête (4) de mesure, dans lequel

$C_0$ = coefficient de corrélation et

$F_{loss}$ = perte de force, qui provient de la force de flexion de la membrane du convertisseur (5) et de la force d'inertie, et **en ce qu'**ensuite on met au moins un objet (7) de volume $V_s$ à l'intérieur de la chambre (2) de mesure et on produit un signal $\varepsilon_s$, en appliquant la même amplitude A et fréquence $f$ que lors de la mesure à vide, et **en ce que**, pour le signal $\varepsilon_s$ produit on a l'équation suivante :

$$\varepsilon_s = \frac{V_0 - V_s}{p_a \gamma_q S^2} C(A, f, t) \qquad \text{(équation 7)}$$

avec $\gamma_q$ = indice quasi-adiabatique de l'air ou du gaz dans l'espace pour du gaz de la chambre (2) de mesure avec

$$C(A, f, t) = C_0 \left( \frac{\partial func(A, f, t)}{\partial t} - \frac{\partial F_{loss}}{\partial t} \right)$$ pour des procédés de mesure inductifs (10) et capacitifs (11, 12) de la tête (4) de capteur, et

$C(A, f, t) = C_0(func(A, f, t) - F_{loss})$ pour des méthodes (13) de mesure optiques de la tête (4) de mesure, dans lequel

$C_0$ = coefficient de corrélation et

$F_{loss}$ = perte de force, qui provient de la force de flexion de la membrane du convertisseur (5) et de la force d'inertie, et **en ce que** l'on détermine les variations $\varepsilon_{rel}$ relatives des signaux $\varepsilon$ et $\varepsilon_s$, qui dépendent linéairement du volume V$s$ de l'objet et pour lesquelles on a la relation suivante :

$$\varepsilon_{rel} = \frac{\varepsilon - \varepsilon_s}{\varepsilon} = \frac{V_s}{V_0} \qquad \text{(équation 8)}$$

2. Procédé suivant la revendication précédente,
   **caractérisé**

   **en ce que** l'on effectue la mesure de la variation de déplacement de la membrane du convertisseur (5) à au moins une fréquence dans une plage de fréquences de > 0 Hz à $\frac{v}{4 * L}$ Hz, $L$ décrivant la distance la plus grande entre deux points dans la chambre (2) de mesure et v la vitesse acoustique du son dans le gaz utilisé respectivement.

3. Procédé suivant l'une des revendications précédentes,
   **caractérisé**
   **en ce que** l'on effectue la mesure de la variation du déplacement de la membrane du convertisseur (5) à plusieurs fréquences différentes.

4. Procédé suivant l'une des revendications précédentes,
   **caractérisé**
   **en ce que**, pour la détermination de la porosité d'au moins un objet (7), on effectue la mesure de la variation du déplacement de la membrane du convertisseur (5) à au moins ≥ 2 fréquences différentes, dans lequel on mesure, dans une plage de fréquences, qui d'une part se trouve en-dessous du domaine de transition respectif et qui d'autre part se trouve au-dessus du domaine de transition respectif.

5. Procédé suivant l'une des revendications précédentes,

**caractérisé**

**en ce que**, pour la détermination du volume vrai d'un objet (7), on règle au moins une fréquence, à laquelle l'air ou le gaz, dans les pores de l'objet (7), peut réagir sur les variations de la pression dans la chambre (2) de mesure.

6. Procédé suivant l'une des revendications précédentes,
**caractérisé**
**en ce que**, pour la détermination du volume total d'un objet (7), on règle au moins une fréquence, à laquelle l'air ou le gaz, dans les pores de l'objet (7), ne peut pas réagir sur les variations de la pression dans la chambre (2) de mesure.

7. Procédé suivant l'une des revendications précédentes,
**caractérisé**
**en ce qu'**on l'effectue alors que de l'air et/ou du gaz est dans la chambre (2) de mesure, dans lequel les gaz n'entrent pas en réaction chimique avec les parties constitutives de l'installation ou de l'objet (7) à mesurer.

8. Procédé suivant l'une des revendications précédentes,
**caractérisé**
**en ce qu'**on l'effectue, lors d'une mesure à une fréquence individuelle, avec un temps de fonctionnement < 2 secondes.

9. Procédé suivant l'une des revendications précédentes,
**caractérisé**
**en ce qu'**on l'effectue, lors d'une mesure à des fréquences différentes, en particulier dans 30 pas de fréquence, avec un temps de fonctionnement < 15 secondes.

10. Procédé suivant l'une des revendications précédentes,
**caractérisé**
**en ce que** l'on mesure des objets (7) ayant une plage de volumes de 1 microlitre à 1000 millilitres.

11. Installation pour effectuer le procédé suivant l'une des revendications 1 à 10 comprenant un fond (1) de mesure, une chambre (2) de mesure pouvant être fermée, un générateur de signal, un moyen de production et de détection de variations de pression dans la chambre (2) de mesure, comprenant au moins une tête (3) de convertisseur et au moins une tête (4) de capteur à électronique associée,
dans laquelle la tête (3) du convertisseur a un convertisseur (5) ayant une membrane et au moins un microphone à condensateur, comme capteur (6) de la pression dans la chambre de mesure, dans laquelle le générateur de signal alimente le convertisseur (5) pour la production de signaux ($\varepsilon$, $\varepsilon_s$) dans la chambre (2) de mesure, dans laquelle la tête (4) de capteur a des propriétés de mesure inductives, capacitives ou optiques et mesure, par l'électronique associée, une variation du déplacement de la membrane, et dans laquelle le générateur de signal et la tête (3) du convertisseur sont configurés de manière à effectuer les stades du procédé suivant la revendication 1 à 10.

12. Installation suivant la revendication précédente,
**caractérisée en ce que**
le convertisseur (5) est un hautparleur.

13. Installation suivant l'une des revendications 11 à 12 précédentes,
**caractérisée en ce que**
le convertisseur (5) est un convertisseur électromécanique, qui est alimenté par un générateur de signal électronique.

14. Installation suivant l'une des revendications 11 à 13 précédentes,
**caractérisée en ce que**
la chambre (2) de mesure est remplie d'air et/ou de gaz différents, qui n'entrent pas en réaction chimique avec les parties constitutives de l'installation ou de l'objet à mesurer.

15. Installation suivant l'une des revendications 11 à 14 précédentes,
**caractérisée en ce que**
la chambre (2) de mesure peut être fermée par son propre poids par le fond (1) de mesure.

**16.** Installation suivant l'une des revendications 11 à 15 précédentes,
**caractérisée en ce que**
la tête (4) de capteur a des propriétés de mesure inductives, capacitives et optiques.

**17.** Installation suivant l'une des revendications 11 à 16,
**caractérisée en ce que**
la tête (4) de capteur ayant des propriétés de mesure inductives est assemblée fixement au boîtier de la tête (3) du convertisseur et est conformée sous la forme d'un microphone dynamique constitué d'une membrane (14) et d'une bobine (15).

**18.** Installation suivant la revendication 17 précédente,
**caractérisée en ce que**
la bobine (15) est fixée directement sur la membrane du convertisseur (5).

**19.** Installation suivant l'une des revendications 11 à 16,
**caractérisée en ce que**
la tête (4) de capteur ayant des propriétés de mesure capacitives comprend au moins une première plaque (16) de capacité variable, qui est fixée au boîtier de la tête (4) du capteur, et au moins une deuxième plaque (17) est reliée à la membrane du convertisseur (5).

**20.** Installation suivant l'une des revendications 11 à 16,
**caractérisée en ce que**
la tête (4) du capteur ayant des propriétés de mesure optiques comprend une source (18) lumineuse et un photo-capteur (19), qui réfléchit, de la membrane du convertisseur (5) au photo-capteur (19), la lumière émise par le source (18) lumineuse.

**21.** Installation suivant l'une des revendications 11 à 20 précédentes,
**caractérisée en ce qu'**
elle comprend des inserts (8, 9) de type grille ou corbeille de réception de plusieurs objets (7).

**22.** Installation suivant l'une des revendications 11 à 21 précédentes,
**caractérisée en ce qu'**
elle comprend une unité de pesée.

Fig. 1a

Fig. 1b

Fig. 1c

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4072046 A
- US 5824892 A
- US 2016120443 A1

**In der Beschreibung aufgeführte Nicht-Patentliteratur**

- **TORIGOE, I. ; ISHII, Y.** Acoustic Bridge Volumeter. *Trans. Soc. Instrum. Control Eng.,* 2001, vol. E-1, 164-170
- **KOBATA, T. ; UEKI, M. ; OOIWA, A ; ISHII, Y.** Measurement of the volume of weights using an acoustic volumeter and the reliability of such measurement. *Metrologia,* 2004, vol. 41, S75-S83